# EUROPÄISCHE PATENTANMELDUNG

(11) **EP 4 365 802 A2**
(43) Veröffentlichungstag der Anmeldung: **08.05.2024**
(21) Anmeldenummer: 24150397.8
(22) Anmeldetag: 27.06.2014
(51) Int. Cl.: G06Q 10/10

(54) **PLATTFORM-VORRICHTUNG FÜR PASSIV VERBREITETES QUALITATIVES SCHWARM-WISSEN**

(30) Priorität: 28.11.2013 WO PCT/DE2013/100400
(62) Teilanmeldung aus: 14771500.7
(71) Anmelder: Faulwetter, Patrick, Marina del Rey, CA 90292 (US)
(72) Erfinder: Die Erfindernennung liegt noch nicht vor
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, wird eine passiv automatisierte Distribution von von Seiten der Nutzer-Teilnehmer gesammelter Information dadurch ermöglicht, dass die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von in jeweils mittels einer vorgebbaren Kodierung identifizierbaren, einer Mehrzahl unterschiedlicher Themen zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist zum einen darin zu sehen, dass die derzeitigen Plattformen Informationen speichern, ohne dass diesen Informationen streng vorgebbare Bearbeitungskriterien und streng vorgebbare Evaluierungskriterien beigemessen werden.

Zum anderen sind die bekannten Plattform-Vorrichtungen nicht effektiv in der Verbreitung von Schwarmwissen.

Aufgabe der Erfindung ist es deshalb, eine Plattform-Vorrichtung zu schaffen, mittels derer in einem ersten Speicher gespeicherte Informationen nach streng vorgebbaren Bearbeitungskriterien seitens der Netz-Teilnehmer bewertbar und mit Zusätzen versehbar oder anderweitig änderbar ist und mittels derer eine effektive automatisierte Verbreitung insbesondere von eine qualitative Information darstellendem Schwarmwissen ermöglicht ist.

Für eine Plattform-Vorrichtung der eingangs genannten Art wird diese Aufgabe dadurch gelöst, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, und wobei bei Erkennen des vorgegebenen Themas seitens einer web-platzierte Suchmaschine mittels eines als elektronischer Filter ausgelegten Suchbegriffes, der dem vorgegebenen Thema der betreffenden dualen Einheit entspricht, eine Kopiereinrichtung den Inhalt des ersten und den Inhalt des zweiten Speicherplatzes der dualen Einheit kopiert und mittels einer Sendeeinrichtung als Informations-Paket an die web-platzierte Suchmaschine übermittelt.

Bevorzugte Ausführungsformen der Erfindung sind Gegenstand der Unteransprüche.

Bei der erfindungsgemäßen Plattform-Vorrichtung wird durch die Merkmalskombination, dass die Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, und wobei bei Erkennen des vorgegebenen Themas seitens einer web-platzierte Suchmaschine mittels eines als elektronischer Filter ausgelegten Suchbegriffes, der dem vorgegebenen Thema der betreffenden dualen Einheit entspricht, eine Kopiereinrichtung den Inhalt des ersten und den Inhalt des zweiten Speicherplatzes der dualen Einheit kopiert und mittels einer Sendeeinrichtung als Informations-Paket an die web-platzierte Suchmaschine übermittelt, erreicht, dass über eine Bildung dualer Einheiten Informationen, insbesondere solche, die eine qualitative Information darstellen, bezüglich sehr spezifischer Bearbeitungsvorgaben bearbeitbar, änderbar und dann speicherbar sind, wobei die in Form von Einzelbewertungen, Einzelergänzungen und Einzelkommentaren eingebrachten Informationen eine Form von Schwarmwissen bilden, das mittels streng vorgebbarer Kriterien per passiver automatisierter Übermittlung (DuUfeed) an eine vorherbestimmbare Menge von Nutzer-Teilnehmern übermittelbar ist.

Ziel und Zweck eines von der Mehrzahl der Nutzer-Teilnehmer durchführbaren Bearbeitungsvorgangs ist es dabei zuförderst, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass eine Zusatzinformation von einer qualitativen Bewertung der auf dem ersten Speicherplatz gespeicherten Informationen seitens der Mehrzahl von Nutzer-Teilnehmern gebildet ist.

Vorzugsweise ist mindestens eine Berechnungs-Einrichtung vorgesehen, um aufgrund der eingelesenen qualitativen Bewertungen seitens der Nutzer-Teilnehmer eine Schwarm-Bewertungs-Information zu erstellen. Dabei kann in dem editierbaren zweiten Speicherplatz Zusatz-Informationen in Form mittels der mindestens einen Berechnungs-Einrichtung ermittelter, qualitativer Bewertungen der auf dem ersten Speicherplatz gespeicherten Informationen seitens der Nutzer-Teilnehmer einlesbar und speicherbar sein, wobei die mindestens eine Berechnungs-Einrichtung dann ausgelegt ist, um aufgrund eingelesener individueller qualitativer Bewertungen eine Schwarm-Bewertungs-Information zu erstellen.

Die mindestens eine Berechnungs-Einrichtung ist vorzugsweise ausgelegt, um eine qualitative Bewertung mittels einer jedem Nutzer-Teilnehmer ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Dabei kann beispielsweise eine Punkteskala zum Einsatz kommen, die ausgelegt ist, um eine Vergabe von Punkten zwischen 0 und 100 seitens eines jeden der Nutzer-Teilnehmer zu ermöglichen.

Gemäß einer wichtigen bevorzugten Ausführungsform der erfindungsgemäßen Vorrichtung ist vorgesehen, dass eine erste Berechnungs-Einrichtung vorgesehen ist, die eine Mittelwertbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben.

Eine zweite Berechnungs-Einrichtung ist vorzugsweise zusätzlich vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der ersten Berechnungs-Einrichtung ermittelten Punkte-Mittelwert definiert ist.

Gemäß einer weiteren bevorzugten Ausführungsform der erfindungsgemäßen Vorrichtung ist eine erste Kopier-Einrichtung vorgesehen, die sukzessive hintereinander die innerhalb vorgebbarer Zeitabschnitte auf dem zweiten Speicherplatz gespeicherten qualitativen Bewertungen als nützliche Informationen interpretiert und auf den ersten Speicherplatz überträgt und die diesbezüglichen vorherigen Informationen auf dem ersten Speicherplatz überschreibt.

Des Weiteren ist vorzugsweise auch eine Zeitgeber-Einrichtung vorgesehen, die in vorgebbaren konstanten Zeitabschnitten an die erste und zweite Berechnungs-Einrichtung sowie die erste Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer der obigen Ausführungsform ähnlichen Ausführung der erfindungsgemäßen Vorrichtung ist der editierbare zweite Speicherplatz untereilt in einen Inhalts-Speicherplatz, in den Zusatzinformationen zu den auf dem ersten Speicherplatz gespeicherten Informationen in Form von Ergänzungs-Informationen der auf dem ersten Speicherplatz gespeicherten Informationen einlesbar sind, und einen Bewertungs-Speicherplatz, in den qualitative Bewertungen der auf dem zweiten Speicherplatz gespeicherten Ergänzungs-Informationen seitens der Nutzer-Teilnehmer einlesbar sind, wobei mindestens eine Berechnungs-Einrichtung vorgesehen ist, um aufgrund eingelesener qualitativer Bewertungen eine Schwarm-Bewertungs-Information zu erstellen.

Die hier zum Einsatz kommende mindestens eine Berechnungs-Einrichtung ist vorzugsweise ausgelegt, um eine qualitative Bewertung mittels einer jedem Nutzer-Teilnehmer in den zweiten Speicherplatz ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Die Punkteskala kann auch hier ausgelegt sein, um eine Vergabe von Punkten zwischen 0 und 100 seitens eines jeden der Nutzer-Teilnehmer zu ermöglichen.

Vorzugsweise kommt eine dritte Berechnungs-Einrichtung zum Einsatz, die eine Mittelwertbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl, die Nutzer-Teilnehmer im Wege einer jeweiligen Bewertung einer Ergänzungs-Information vergeben haben, geteilt durch die Anzahl von Nutzer-Teilnehmern, die jeweils eine Bewertung einer Ergänzungs-Information abgegeben haben.

Eine vierte Berechnungs-Einrichtung ist vorzugsweise vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der dritten Berechnungs-Einrichtung ermittelten Punkte-Mittelwert der Bewertung einer Ergänzungs-Information definiert ist.

Eine zweite Kopier-Einrichtung ist vorzugsweise ebenfalls vorgesehen, die sukzessive hintereinander am Endpunkt vorgebbarer Zeitabschnitte die auf dem zweiten Speicherplatz gespeicherten qualitativen Bewertungen einer Ergänzungs-Information abhängig von vorherbestimmten Vorgaben betreffend Mittelwert und Varianz in einer ersten Entscheider-Einrichtung als nützliche oder unnützliche Informationen interpretiert und die Ergänzungs-Information im Falle des Ermittelns einer nützlichen Information auf den ersten Speicherplatz überträgt.

Auch hier ist vorzugsweise eine Zeitgeber-Einrichtung vorgesehen, die in vorgebbaren konstanten Zeitabschnitten an die dritte und vierte Berechnungs-Einrichtung sowie die zweite Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer der obigen Ausführungsform anderen ähnlichen Ausführung der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Korrektur-Informationen der auf dem ersten Speicherplatz gespeicherten Informationen einlesbar sind, und einen Bewertungs-Speicherplatz, in den qualitative Bewertungen der auf dem zweiten Speicherplatz gespeicherten Korrektur-Informationen einlesbar sind, wobei mindestens eine Berechnungs-Einrichtung vorgesehen ist, um aufgrund eingelesener qualitativer Bewertungen eine Schwarm-Bewertungs-Information zu erstellen.

Gemäß bevorzugter Ausführungsform ist die mindestens eine Berechnungs-Einrichtung ausgelegt, um eine qualitative Bewertung mittels einer jedem Nutzer-Teilnehmer in den zweiten Speicherplatz ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind, und wobei die Punkteskala auch hier vorzugsweise ausgelegt ist, um eine Vergabe von Punkten zwischen 0 und 100 seitens eines jeden der Nutzer-Teilnehmer zu ermöglichen.

Eine fünfte Berechnungs-Einrichtung ist vorzugsweise vorgesehen, die eine Mittelwertbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl, die Nutzer-Teilnehmer im Wege einer jeweiligen Bewertung einer Korrektur-Information vergeben haben, geteilt durch die Anzahl von Nutzer-Teilnehmern, die jeweils eine Bewertung einer Korrektur-Information abgegeben haben.

Gemäß einer weiteren bevorzugten Ausführungsform der erfindungsgemäßen Vorrichtung ist eine sechste Berechnungs-Einrichtung vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der fünften Berechnungs-Einrichtung ermittelten Punkte-Mittelwert der Bewertung einer Korrektur-Information definiert ist.

Eine dritte Kopier-Einrichtung ist des Weiteren vorzugsweise vorgesehen, die sukzessive hintereinander am Endpunkt vorgebbarer Zeitabschnitte die auf dem zweiten Speicherplatz gespeicherten qualitativen Bewertungen einer Korrektur-Information abhängig von vorherbestimmten Vorgaben betreffend Mittelwert und Varianz in einer zweiten Entscheider-Einrichtung als nützliche oder unnützliche Informationen interpretiert und die Korrektur-Information im Falle des Ermittelns einer nützlichen Information auf den ersten Speicherplatz überträgt und die diesbezüglichen vorherigen Informationen auf dem ersten Speicherplatz überschreibt.

Gemäß einer weiteren bevorzugten Ausführungsform der erfindungsgemäßen Vorrichtung ist eine Zeitgeber-Einrichtung vorgesehen, die in vorgebbaren konstanten Zeitabschnitten an die fünfte und sechste Berechnungs-Einrichtung sowie die dritte Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Jedem der Nutzer-Teilnehmer ist vorzugsweise eine Erstplatzierung einer dualen Einheit mit erstem und zweitem Speicherplatz als Initial-Teilnehmer ermöglicht.

Die erfindungsgemäße Vorrichtung wird im Folgenden anhand einer bevorzugten Ausführungsform erläutert, die in den Figuren der Zeichnung dargestellt ist. Es zeigen:
- Fig. 1: eine prinzipielle Ausgestaltung einer dualen Einheit (DuU) entsprechend einer bevorzugten Ausführungsform der Erfindung in Form eines Blockdiagramms;
- Fig. 2: eine zweite Ausführungsform der erfindungsgemäßen Vorrichtung in einer Blockansicht;
- Fig. 3: eine dritte Ausführungsform der erfindungsgemäßen Vorrichtung in einer Blockansicht.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform 100 gespeicherten Informationen seitens der Nutzer-Teilnehmer ausgelegt.

Die in eine Vielzahl unterschiedlicher Themen unterteilten Speicherplätze 110 sind auf der Plattform 100 jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen 114 versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen 113 bezüglich der auf dem ersten Speicherplatz 111 gespeicherten Initial-Information 114 seitens der Mehrzahl von Nutzer-Teilnehmern ausgelegt ist.

Bei Erkennen des vorgegebenen Themas seitens einer web-platzierte Suchmaschine 300 mittels eines als elektronischer Filter 310 ausgelegten Suchbegriffes, der dem vorgegebenen Thema der betreffenden dualen Einheit entspricht, kopiert eine Kopiereinrichtung 270 den Inhalt des ersten 111 und den Inhalt des zweiten Speicherplatzes 112 der dualen Einheit und übermittelt diese Inhalte mittels einer Sendeeinrichtung 280 als Informations-Paket an die web-platzierte Suchmaschine 300.

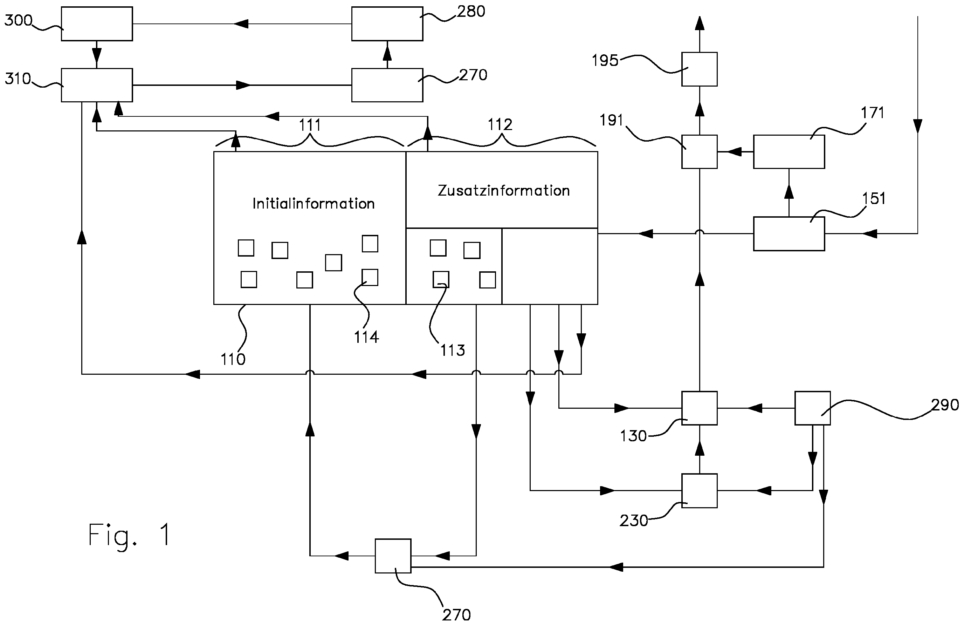

Bei der in Figur 1 dargestellten Ausführungsform der vorliegenden Erfindung ist eine Zusatzinformation von einer qualitativen Bewertungen der auf dem ersten Speicherplatz 111 gespeicherten Informationen seitens der Mehrzahl von Nutzer-Teilnehmern gebildet, wobei mindestens eine Berechnungs-Einrichtung 130 vorgesehen ist, um aufgrund der eingelesenen qualitativen Bewertungen seitens der Nutzer-Teilnehmer eine Schwarm-Bewertungs-Information zu erstellen.

In dem editierbaren zweiten Speicherplatz 112 sind Zusatz-Informationen 113 in Form mittels der mindestens einen Berechnungs-Einrichtung 130 ermittelter, qualitativer Bewertungen der auf dem ersten Speicherplatz 111 gespeicherten Informationen seitens der Nutzer-Teilnehmer einlesbar und speicherbar, wobei die mindestens eine Berechnungs-Einrichtung 130 ausgelegt ist, um aufgrund eingelesener individueller qualitativer Bewertungen eine Schwarm-Bewertungs-Information zu erstellen.

Die mindestens eine Berechnungs-Einrichtung 130 ist ausgelegt, um eine qualitative Bewertung mittels einer jedem Nutzer-Teilnehmer ermöglichten Eingabe individuell zu vergebender Punkte einer Punkteskala mit vorherbestimmter Punktemenge zwischen 0 und 100 seitens eines jeden der Nutzer-Teilnehmer zu ermöglichen.

Eine erste Berechnungs-Einrichtung 130 ist vorgesehen, die eine Mittelwertbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz 112 speichert, wobei ein Punkte-Mittelwert berechnet wird durch Addition aller Punkte zwischen 0 und maximaler Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben.

Eine zweite Berechnungs-Einrichtung 230 ist vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der ersten Berechnungs-Einrichtung 130 ermittelten Punkte-Mittelwert definiert ist.

Des Weiteren ist eine erste Kopier-Einrichtung 270 vorgesehen, die sukzessive hintereinander die innerhalb vorgebbarer Zeitabschnitte auf dem zweiten Speicherplatz 112 gespeicherten qualitativen Bewertungen als nützliche Informationen interpretiert und auf den ersten Speicherplatz 111 überträgt und die diesbezüglichen vorherigen Informationen auf dem ersten Speicherplatz 111 überschreibt.

Eine Zeitgeber-Einrichtung 290 ist vorgesehen, die am Endpunkt vorgebbarer konstanter Zeitabschnitte an die erste und zweite Berechnungs-Einrichtung 130, 230 sowie die erste Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

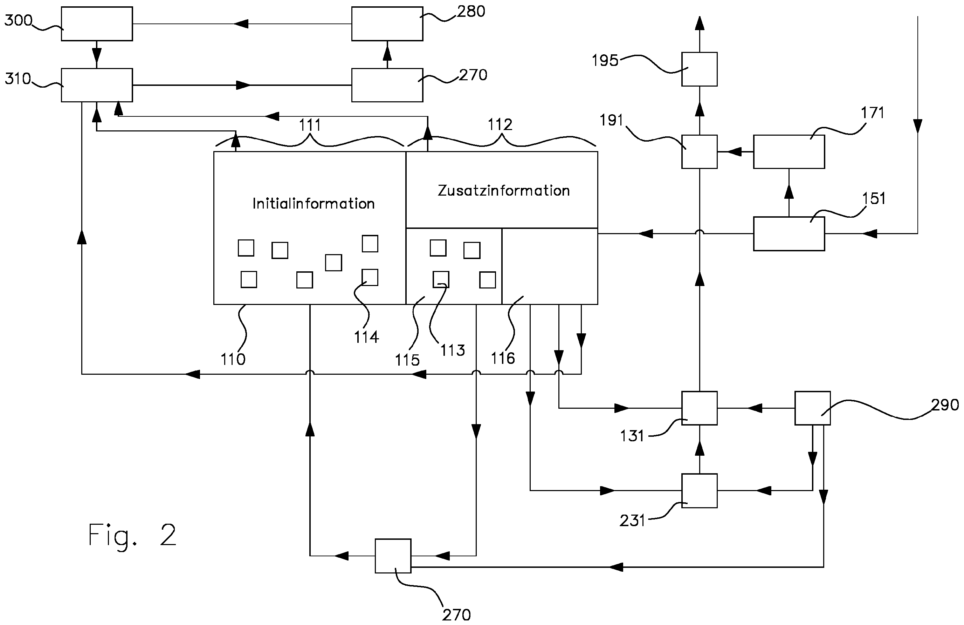

Bei der in Figur 2 dargestellten Ausführungsform der vorliegenden Erfindung ist der editierbare zweite Speicherplatz 112 untereilt in einen Inhalts-Speicherplatz 115, in den Zusatzinformationen 113 zu den auf dem ersten Speicherplatz 111 gespeicherten Informationen in Form von Ergänzungs-Informationen der auf dem ersten Speicherplatz 111 gespeicherten Informationen einlesbar sind, und einen Bewertungs-Speicherplatz 116, in den qualitative Bewertungen der auf dem zweiten Speicherplatz 112 gespeicherten Ergänzungs-Informationen seitens der Nutzer-Teilnehmer einlesbar sind, wobei mindestens eine dritte Berechnungs-Einrichtung 131 vorgesehen ist, um aufgrund eingelesener qualitativer Bewertungen eine Schwarm-Bewertungs-Information zu erstellen.

Die dritte Berechnungs-Einrichtung 131 ist dabei ausgelegt, um eine qualitative Bewertung mittels einer jedem Nutzer-Teilnehmer in den zweiten Speicherplatz 112 ermöglichte Eingabe individuell zu vergebender Punkte einer Punkteskala mit vorherbestimmter Punktemenge durchzuführen, wobei die Punkteskala wiederum ausgelegt ist, um eine Vergabe von Punkten zwischen 0 und 100 seitens eines jeden der Nutzer-Teilnehmer zu ermöglichen.

Die dritte Berechnungs-Einrichtung 131 ist ausgelegt, um eine Mittelwertbildung bezüglich der summarisch auf dem zweiten Speicherplatz 112 eingelesenen, von jeweils unterschiedlichen Nutzer-Teilnehmern vergebenen Punkte durchzuführen und die betreffende Zahl in dem zweiten Speicherplatz 112 zu speichern, wobei ein Punkte-Mittelwert berechnet wird durch Addition aller Punkte zwischen 0 und einer maximalen Punktezahl, die Nutzer-Teilnehmer im Wege einer jeweiligen Bewertung einer Ergänzungs-Information vergeben haben, geteilt durch die Anzahl von Nutzer-Teilnehmern, die jeweils eine Bewertung einer Ergänzungs-Information abgegeben haben.

Des Weiteren ist eine vierte Berechnungs-Einrichtung 231 vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der dritten Berechnungs-Einrichtung 131 ermittelten Punkte-Mittelwert der Bewertung einer Ergänzungs-Information definiert ist.

Eine zweite Kopier-Einrichtung 270 ist ebenfalls vorgesehen, die sukzessive hintereinander am Endpunkt vorgebbarer Zeitabschnitte die auf dem zweiten Speicherplatz 112 gespeicherten qualitativen Bewertungen einer Ergänzungs-Information abhängig von vorherbestimmten Vorgaben betreffend Mittelwert und Varianz in einer ersten Entscheider-Einrichtung als nützliche oder unnützliche Informationen interpretiert und die Ergänzungs-Information im Falle des Ermittelns einer nützlichen Information auf den ersten Speicherplatz 111 überträgt.

Eine Zeitgeber-Einrichtung 290 ist vorgesehen, die in vorgebbaren konstanten Zeitabschnitten an die dritte und vierte Berechnungs-Einrichtung 131, 231 sowie die zweite Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

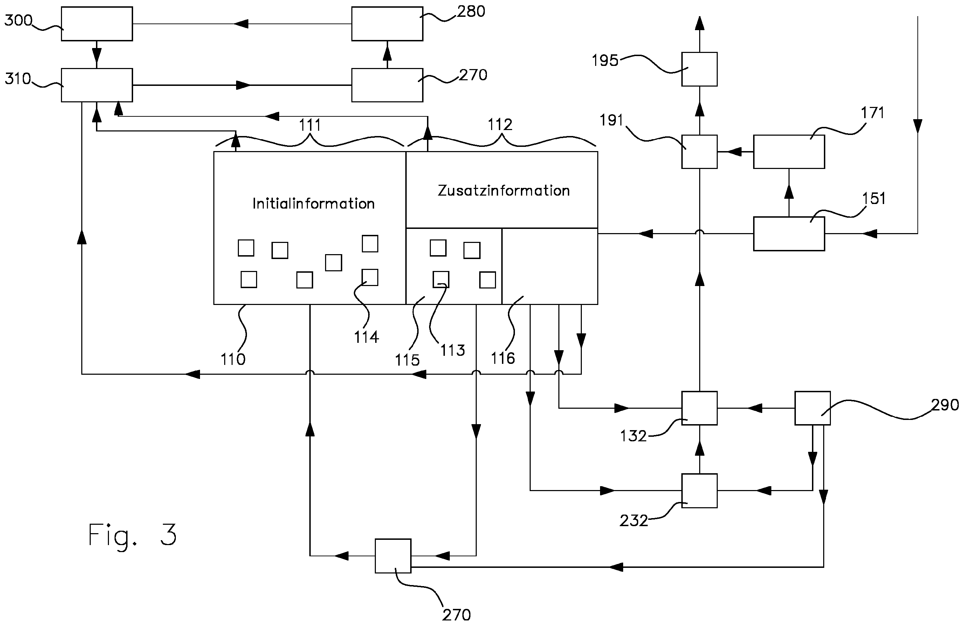

Bei der in Figur 3 dargestellten Ausführungsform der vorliegenden Erfindung ist der editierbare zweite Speicherplatz 112 unterteilt ist in einen Inhalts-Speicherplatz 115, in den Zusatzinformationen 113 zu den auf dem ersten Speicherplatz 111 gespeicherten Informationen in Form von Korrektur-Informationen der auf dem ersten Speicherplatz 111 gespeicherten Informationen einlesbar sind, und einen Bewertungs-Speicherplatz 116, in den qualitative Bewertungen der auf dem zweiten Speicherplatz 112 gespeicherten Korrektur-Informationen einlesbar sind, wobei mindestens eine fünfte Berechnungs-Einrichtung 132 vorgesehen ist, um aufgrund eingelesener qualitativer Bewertungen eine Schwarm-Bewertungs-Information zu erstellen.

Die fünfte Berechnungs-Einrichtung 132 ist ausgelegt, um eine qualitative Bewertung mittels einer jedem Nutzer-Teilnehmer in den zweiten Speicherplatz 112 ermöglichte Eingabe individuell zu vergebender Punkte einer Punkteskala mit vorherbestimmter Punktemenge durchzuführen. Auch hier ist die Punkteskala ausgelegt, um eine Vergabe von Punkten zwischen 0 und 100 seitens eines jeden der Nutzer-Teilnehmer zu ermöglichen.

Die fünfte Berechnungs-Einrichtung 132 ist ausgebildet, um eine Mittelwertbildung bezüglich der summarisch auf dem zweiten Speicherplatz 112 eingelesenen, von jeweils unterschiedlichen Nutzer-Teilnehmern vergebenen Punkte durchzuführen und die betreffende Zahl in dem zweiten Speicherplatz 112 zu speichern, wobei ein Punkte-Mittelwert berechnet wird durch Addition aller Punkte zwischen 0 und 100, die Nutzer-Teilnehmer im Wege einer jeweiligen Bewertung einer Korrektur-Information vergeben haben, geteilt durch die Anzahl von Nutzer-Teilnehmern, die jeweils eine Bewertung einer Korrektur-Information abgegeben haben.

Des Weiteren ist eine sechste Berechnungs-Einrichtung 232 vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der fünften Berechnungs-Einrichtung 132 ermittelten Punkte-Mittelwert der Bewertung einer Korrektur-Information definiert ist.

Eine dritte Kopier-Einrichtung 270 ist vorgesehen, die sukzessive hintereinander am Endpunkt vorgebbarer Zeitabschnitte die auf dem zweiten Speicherplatz 112 gespeicherten qualitativen Bewertungen einer Korrektur-Information abhängig von vorherbestimmten Vorgaben betreffend Mittelwert und Varianz in einer zweiten Entscheider-Einrichtung als nützliche oder unnützliche Informationen interpretiert und die Korrektur-Information im Falle des Ermittelns einer nützlichen Information auf den ersten Speicherplatz 111 überträgt und die diesbezüglichen vorherigen Informationen auf dem ersten Speicherplatz 111 überschreibt.

Eine Zeitgeber-Einrichtung 290 ist vorgesehen, die in vorgebbaren konstanten Zeitabschnitten an die fünfte und sechste Berechnungs-Einrichtung 132, 232 sowie die dritte Kopier-Einrichtung 270 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Jedem der Nutzer-Teilnehmer ist eine Erstplatzierung einer dualen Einheit mit erstem 111 und zweitem Speicherplatz 112 als Initial-Teilnehmer ermöglicht.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von in jeweils mittels einer vorgebbaren Kodierung identifizierbaren, einer Mehrzahl unterschiedlicher Themen zugeordneten Speicherplätzen (110) einer Plattform (100) gespeicherten Informationen seitens der Nutzer-Teilnehmer, **dadurch gekennzeichnet, dass** die Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen (114) versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen (113) bezüglich der auf dem ersten Speicherplatz (111) gespeicherten Initial-Information (114) seitens der Mehrzahl von Nutzer-Teilnehmern ausgelegt ist, und wobei bei Erkennen des vorgegebenen Themas seitens einer web-platzierte Suchmaschine (300) mittels eines als elektronischer Filter (310) ausgelegten Suchbegriffes, der dem vorgegebenen Thema der betreffenden dualen Einheit entspricht, eine Kopiereinrichtung (270) den Inhalt des ersten Speicherplatzes (111) und den Inhalt des zweiten Speicherplatzes (112) der dualen Einheit kopiert und mittels einer Sendeeinrichtung (280) als Informations-Paket an die web-platzierte Suchmaschine (300) übermittelt, wobei
- eine Zusatzinformation von einer qualitativen Bewertung der auf dem ersten Speicherplatz (111) gespeicherten Informationen seitens der Mehrzahl von Nutzer-Teilnehmern gebildet ist,
- mindestens eine Berechnungs-Einrichtung (130) vorgesehen ist, um aufgrund der eingelesenen qualitativen Bewertungen seitens der Nutzer-Teilnehmer eine Schwarm-Bewertungs-Information zu erstellen,
- in dem editierbaren zweiten Speicherplatz (112) Zusatz-Informationen (113) in Form mittels der mindestens einen Berechnungs-Einrichtung (130) ermittelter, qualitativer Bewertungen der auf dem ersten Speicherplatz (111) gespeicherten Informationen seitens der Nutzer-Teilnehmer einlesbar und jeweils in einem betreffenden Speicher speicherbar sind, wobei die mindestens eine Berechnungs-Einrichtung (130) ausgelegt ist, um aufgrund eingelesener individueller qualitativer Bewertungen eine Schwarm-Bewertungs-Information zu erstellen,
- die mindestens eine Berechnungs-Einrichtung (130) ausgelegt ist, um eine qualitative Bewertung mittels einer jedem Nutzer-Teilnehmer ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind,
- die Punkteskala ausgelegt ist, um eine Vergabe von Punkten zwischen 0 und 100 seitens eines jeden der Nutzer-Teilnehmer zu ermöglichen,
- eine erste Berechnungs-Einrichtung (130) vorgesehen ist, die eine Mittelwertbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei ein Punkte-Mittelwert berechnet wird durch Addition aller Punkte zwischen 0 und einer maximalen Punktezahl der Punkteskala, die Nutzer-Teilnehmer im Wege einer jeweiligen Bewertung vergeben haben, geteilt durch die Anzahl von Nutzer-Teilnehmern, die jeweils eine Bewertung abgegeben haben,
- eine zweite Berechnungs-Einrichtung (230) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der ersten Berechnungs-Einrichtung (130) ermittelten Punkte-Mittelwert definiert ist.
1, 2, 3, 4, 5, 6 7, 8

2. Vorrichtung nach Anspruch 1, **dadurch gekennzeichnet, dass** eine erste Kopier-Einrichtung (270) vorgesehen ist, die sukzessive hintereinander die innerhalb vorgebbarer Zeitabschnitte auf dem zweiten Speicherplatz (112) gespeicherten qualitativen Bewertungen als nützliche Informationen interpretiert und auf den ersten Speicherplatz (111) überträgt und die diesbezüglichen vorherigen Informationen auf dem ersten Speicherplatz (111) überschreibt.

3. Vorrichtung nach einem der vorhergehenden Ansprüche, **dadurch gekennzeichnet, dass** eine Zeitgeber-Einrichtung (290) vorgesehen ist, die in vorgebbaren konstanten Zeitabschnitten an die erste Berechnungs-Einrichtung (130) und zweite Berechnungs-Einrichtung (230) sowie die erste Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

4. Vorrichtung nach Anspruch 1, **dadurch gekennzeichnet, dass** der editierbare zweite Speicherplatz (112) unterteilt ist in einen Inhalts-Speicherplatz (115), in den Zusatzinformationen zu den auf dem ersten Speicherplatz (111) gespeicherten Informationen in Form von Ergänzungs-Informationen der auf dem ersten Speicherplatz (111) gespeicherten Informationen einlesbar sind, und einen Bewertungs-Speicherplatz (116), in den qualitative Bewertungen der auf dem zweiten Speicherplatz (112) gespeicherten Ergänzungs-Informationen seitens der Nutzer-Teilnehmer einlesbar sind, wobei mindestens eine dritte Berechnungs-Einrichtung (131) vorgesehen ist, um aufgrund eingelesener qualitativer Bewertungen eine Schwarm-Bewertungs-Information zu erstellen.

5. Vorrichtung nach Anspruch 4, **dadurch gekennzeichnet, dass** die dritte Berechnungs-Einrichtung (131) ausgelegt ist, um eine qualitative Bewertung mittels einer jedem Nutzer-Teilnehmer in den zweiten Speicherplatz (112) ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind.

6. Vorrichtung nach Anspruch 5, **dadurch gekennzeichnet, dass** die Punkteskala ausgelegt ist, um eine Vergabe von Punkten zwischen 0 und 100 seitens eines jeden der Nutzer-Teilnehmer zu ermöglichen.

7. Vorrichtung nach Anspruch 6, **dadurch gekennzeichnet, dass** die dritte Berechnungs-Einrichtung (131) vorgesehen ist, die eine Mittelwertbildung bezüglich der summarisch auf dem zweiten Speicherplatz (112) eingelesenen, von jeweils unterschiedlichen Nutzer-Teilnehmern vergebenen Punkte durchführt und die betreffende Zahl in dem zweiten Speicherplatz (112) speichert, wobei ein Punkte-Mittelwert berechnet wird durch Addition aller Punkte zwischen 0 und einer maximalen Punktezahl, die Nutzer-Teilnehmer im Wege einer jeweiligen Bewertung einer Ergänzungs-Information vergeben haben, geteilt durch die Anzahl von Nutzer-Teilnehmern, die jeweils eine Bewertung einer Ergänzungs-Information abgegeben haben.

8. Vorrichtung nach einem der Anspruch 7, **dadurch gekennzeichnet, dass** eine vierte Berechnungs-Einrichtung (231) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der dritten Berechnungs-Einrichtung (131) ermittelten Punkte-Mittelwert der Bewertung einer Ergänzungs-Information definiert ist.

9. Vorrichtung nach den Ansprüchen 7 und 8, **dadurch gekennzeichnet, dass** eine zweite Kopier-Einrichtung (270) vorgesehen ist, die sukzessive hintereinander am Endpunkt vorgebbarer Zeitabschnitte die auf dem zweiten Speicherplatz (112) gespeicherten qualitativen Bewertungen einer Ergänzungs-Information abhängig von vorherbestimmten Vorgaben betreffend Mittelwert und Varianz in einer ersten Entscheider-Einrichtung (175) als nützliche oder unnützliche Informationen interpretiert und die Ergänzungs-Information im Falle des Ermittelns einer nützlichen Information auf den ersten Speicherplatz (111) überträgt.

10. Vorrichtung nach den Ansprüchen 8 und 9, **dadurch gekennzeichnet, dass** eine Zeitgeber-Einrichtung (290) vorgesehen ist, die in vorgebbaren konstanten Zeitabschnitten an die dritte Berechnungs-Einrichtung (131) und vierte Berechnungs-Einrichtung (231) sowie die zweite Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

11. Vorrichtung nach Anspruch 1, **dadurch gekennzeichnet, dass** der editierbare zweite Speicherplatz (112) unterteilt ist in einen Inhalts-Speicherplatz (115), in den Zusatzinformationen (113) zu den auf dem ersten Speicherplatz (111) gespeicherten Informationen in Form von Korrektur-Informationen der auf dem ersten Speicherplatz (111) gespeicherten Informationen einlesbar sind, und einen Bewertungs-Speicherplatz (116), in den qualitative Bewertungen der auf dem zweiten Speicherplatz (112) gespeicherten Korrektur-Informationen einlesbar sind, wobei mindestens eine fünfte Berechnungs-Einrichtung (132) vorgesehen ist, um aufgrund eingelesener qualitativer Bewertungen eine Schwarm-Bewertungs-Information zu erstellen.

12. Vorrichtung nach Anspruch 11, **dadurch gekennzeichnet, dass** die fünfte Berechnungs-Einrichtung (132) ausgelegt ist, um eine qualitative Bewertung mittels einer jedem Nutzer-Teilnehmer in den zweiten Speicherplatz (112) ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind.

13. Vorrichtung nach Anspruch 12, **dadurch gekennzeichnet, dass** die Punkteskala ausgelegt ist, um eine Vergabe von Punkten zwischen 0 und 100 seitens eines jeden der Nutzer-Teilnehmer zu ermöglichen.

14. Vorrichtung nach Anspruch 13, **dadurch gekennzeichnet, dass** die fünfte Berechnungs-Einrichtung (132) vorgesehen ist, die eine Mittelwertbildung bezüglich der summarisch auf dem zweiten Speicherplatz (112) eingelesenen, von jeweils unterschiedlichen Nutzer-Teilnehmern vergebenen Punkte durchführt und die betreffende Zahl in dem zweiten Speicherplatz (112) speichert, wobei ein Punkte-Mittelwert berechnet wird durch Addition aller Punkte zwischen 0 und einer maximalen Punktezahl, die Nutzer-Teilnehmer im Wege einer jeweiligen Bewertung einer Korrektur-Information vergeben haben, geteilt durch die Anzahl von Nutzer-Teilnehmern, die jeweils eine Bewertung einer Korrektur-Information abgegeben haben.

15. Vorrichtung nach Anspruch 14, **dadurch gekennzeichnet, dass** eine sechste Berechnungs-Einrichtung (232) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der fünften Berechnungs-Einrichtung (132) ermittelten Punkte-Mittelwert der Bewertung einer Korrektur-Information definiert ist.

16. Vorrichtung nach den Ansprüchen 14 und 15, **dadurch gekennzeichnet, dass** eine dritte Kopier-Einrichtung (270) vorgesehen ist, die sukzessive hintereinander am Endpunkt vorgebbarer Zeitabschnitte die auf dem zweiten Speicherplatz (112) gespeicherten qualitativen Bewertungen einer Korrektur-Information abhängig von vorherbestimmten Vorgaben betreffend Mittelwert und Varianz in einer zweiten Entscheider-Einrichtung (176) als nützliche oder unnützliche Informationen interpretiert und die Korrektur-Information im Falle des Ermittelns einer nützlichen Information auf den ersten Speicherplatz (111) überträgt und die diesbezüglichen vorherigen Informationen auf dem ersten Speicherplatz 111 überschreibt.

17. Vorrichtung nach den Ansprüchen 15 und 16, **dadurch gekennzeichnet, dass** eine Zeitgeber-Einrichtung (290) vorgesehen ist, die in vorgebbaren konstanten Zeitabschnitten an die fünfte Berechnungs-Einrichtung (132) und sechste Berechnungs-Einrichtung (232) sowie die dritte Kopier-Einrichtung (270) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

18. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
